(19) **Europäisches Patentamt**

**European Patent Office**

**Office européen des brevets**

(11) Numéro de publication: **0 175 098**
**B1**

(12) **FASCICULE DE BREVET EUROPEEN**

(45) Date de publication du fascicule du brevet: **31.10.90**

(21) Numéro de dépôt: **85109368.2**

(22) Date de dépôt: **25.07.85**

(51) Int. Cl.⁵: **G 01 B 7/02, G 01 B 3/00**

(54) **Palpeur pour dispositifs de mesure de grandeurs linéaires comparatives.**

(30) Priorité: **20.09.84 CH 4505/84**

(43) Date de publication de la demande:
**26.03.86 Bulletin 86/13**

(45) Mention de la délivrance du brevet:
**31.10.90 Bulletin 90/44**

(84) Etats contractants désignés:
**DE FR GB IT**

(56) Documents cités:
**EP-A-0 107 644**
**DE-A-1 222 273**
**DE-C-1 180 149**
**US-A-3 670 421**
**US-A-4 292 740**
**US-A-4 490 913**

**PATENT ABSTRACTS OF JAPAN, vol. 6, no. 166
(P-138)1044r, 31 aou7t 1982; & JP-A-57 82 701
(TOYOTA SHIYATAI K.K.) 24-05-1982**

(73) Titulaire: **TESA S.A.**
**Rue Bugnon 38**
**CH-1020 Renens (CH)**

(72) Inventeur: **Zanier, Adriano**
**Avenue des Huttins 9**
**CH-1008 Prilly (CH)**

(74) Mandataire: **Misrachi, Alfred**
**15, Ch. de la Plantaz**
**CH-1024 Ecublens (CH)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

La présente invention a pour objet un palpeur pour dispositifs de mesure de grandeurs linéaires comparatives tels que par exemple ceux utilisés pour le contrôle dimensionnel de pièces fabriquées en séries et dans lesquels les mesures effectuées sont représentatives des écarts de grandeurs par rapport à un zéro réglé sur une valeur nominale prescrite.

Ce palpeur comporte, comme la plupart des palpeurs connus utilisés dans de tels dispositifs, un corps de référence destiné à être fixé sur un support approprié au maintien d'une pièce à contrôler, un corps mobile déplaçable le long d'éléments de guidage solidaires du corps de référence et portant une touche de mesure, un capteur de déplacements comportant deux éléments de détection liés respectivement l'un au corps de référence et l'autre au corps mobile pour fournir des signaux représentatifs en sens et amplitude des déplacements relatifs de ces deux corps par rapport à un zéro préréglé, un dispositif de prise de mesure apte à délivrer une pression de mesure par poussée élastique appliquée contre une butée solidaire du corps mobile, et un dispositif de dégagement de la touche de mesure apte à appliquer contre cette même butée une contre-pression de dégagement opposée à la pression de mesure.

Sur ce type de palpeur, les dispositifs de prise de mesure et de dégagement de la touche sont prévus pour faciliter et rendre plus fiables les opérations de contrôle dimensionnel. Ils évitent l'intervention manuelle sur les organes mobiles du palpeur, notamment sur la touche de mesure et assurent une certaine constance des pressions appliquées au corps mobile portant la touche, cette dernière fonction tendant à assurer l'identité des conditions de prise de mesure d'une pièce à l'autre.

Dans les palpeurs connus de ce type, la pression de mesure appliquée au corps mobile portant la touche est produite par un ressort de compression mis en appui sur la butée de ce corps et ce ressort est dimensionné au mieux pour que la pression fournie varie peu sur la course de mesure du capteur, qui est généralement de l'ordre du millimètre de part et d'autre du zéro. La contre-pression de dégagement de la touche de mesure, qui agit à l'encontre de ce ressort, est produite par un vérin pneumatique dont la tige est mise en appui sur un élément du corps mobile tel que par exemple la butée en question, à l'opposé dudit ressort.

Lors d'une prise de mesure, l'opérateur doit d'abord dégager la touche de mesure en agissant par exemple par pression manuelle sur une pompe à vacuum raccordée au vérin et la garder dégagée en maintenant la pression pendant la mise en place de la pièce à contrôler dans le support du dispositif de mesure. Puis il effectue la prise de mesure en relâchant la pression dans le vérin, ce qui a pour effet de libérer l'action opposée du ressort et de presser la touche contre la paroi de l'élément de la pièce à contrôler.

Ces palpeurs ainsi utilisés sont satisfaisants mais n'éliminent pas complètement le risque de rencontre brutale de la pièce à contrôler avec la touche de mesure lors de sa mise en place dans le support du dispositif de mesure, comme cela peut se produire lorsque l'opérateur oublie de dégager préalablement la touche ou bien la relâche trop tôt.

Par ailleurs sur certains palpeurs de ce type, le raccord de branchement du circuit d'alimentation du vérin du dispositif de dégagement, qui est axial, se trouve nécessairement du même côté que la touche, l'action de ce vérin étant opposée à celle de la pression de mesure. De ce fait, dans certains montages de dispositifs multicotes nécessitant le rapprochement des deux touches de mesure de deux palpeurs de ce genre, les raccords de ces deux palpeurs se trouvent face à face et constituent une gêne pour ce rapprochement.

Les risques et les inconvénients précités, inhérents au type de palpeur auquel se rapporte l'invention ne sont cependant pas propres à tous les palpeurs connus.

C'est ainsi que dans deux palpeurs de type différent décrits l'un dans le document US-A-3670421 et l'autre dans le document JP-A-5782701, le dispositif de prise de mesure comporte un vérin agencé de manière à mettre en contact la touche de mesure avec la pièce à contrôler, au lieu de l'en écarter, lors de son actionnement par l'opérateur, ce qui supprime les risques de rencontres brutales signalés précédemment. Par ailleurs, le raccord de branchement du circuit d'alimentation du vérin se trouve éloigné de la touche de mesure, ce qui facilite le rapprochement de plusieurs de ces palpeurs dans un montage multicote.

Mais dans ce type de palpeurs, ce n'est pas le corps mobile portant la touche de mesure qui est déplacé par le vérin mais l'ensemble du corps de référence et du corps mobile, le vérin étant de son côté fixé au support de la pièce à contrôler. L'ensemble des éléments qui composent ces palpeurs sont coaxiaux, notamment le capteur de déplacements et les dispositifs de prise de mesure et de dégagement de la touche de mesure, et le corps de référence comporte un élément tubulaire constituant la tige du piston du vérin, au travers de laquelle passe le corps mobile portant la touche de mesure qui se trouve ainsi bien dégagée du vérin et de son raccord d'alimentation.

La pression de mesure est obtenue dans le palpeur selon le document US-A-3670421 par la somme des pressions de même sens de deux ressorts de compression interposés chacun entre un élément du corps de référence et une butée du corps mobile, et dans le palpeur selon JP-A-5782701 par un seul ressort disposé de la même manière.

Il résulte cependant de cet agencement un inconvénient relatif à la modulation de la pression de mesure.

En effet, cette modulation de la pression de mesure ne peut se faire sur ces palpeurs que par changement des ressorts qui la produisent, et ceci par un démontage et un remontage quasi intégral du palpeur, du fait que les éléments qui composent le capteur de déplacement et les dispositifs de prise de mesure et de dégagement de la touche de mesure sont coaxiaux et ne permettent pas de ce fait un accès direct et simple aux logements de ces ressorts.

L'invention a pour but l'élimination de l'ensemble des inconvénients précités.

A cet effet, le palpeur selon l'invention, du type décrit en début d'exposé, est caractérisé en ce que le capteur de déplacement et les dispositifs de prise de mesure et de dégagement de la touche de mesure sont séparés l'un au-dessus des autres dans deux positions parallèles dans les deux corps, en ce que le dispositif de dégagement de la touche de mesure comporte une vis d'appui engagée dans un trou fileté débouchant à l'extérieur du corps de référence et un premier ressort interposé entre cette vis d'appui et un côté de la butée du corps mobile, en ce que le dispositif de prise de mesure comporte un vérin dont le cylindre est fixé dans le corps de référence et dont l'extrémité extérieure du piston est en regard de l'autre côté de la butée du corps mobile, et un second ressort de compression interposé entre cette extrémité et cette face d'appui, la butée du corps mobile étant ainsi interposée entre le premier et le second ressort et subissant leurs pressions antagonistes, et en ce que la constance d'élasticité ainsi que la longueur active de chacun de ces deux ressorts sont déterminées pour produire la pression de mesure en fin de course d'extension du vérin et le dégagement de la touche de mesure en fin de course de rétraction de ce vérin.

De la sorte, non seulement l'actionnement du vérin a pour effet de mettre la touche de mesure en contact avec la pièce à mesurer mais en outre, grâce à la combinaison de la séparation en deux positions parallèles du capteur de déplacements et des dispositifs de prise de mesure et de dégagement de la touche de mesure, et de l'agencement particulier des deux ressorts de compression placés en opposition de part et d'autre de la butée du corps mobile, il a été possible de mettre le premier de ces deux ressorts en appui sur une vis engagée dans un trou fileté débouchant du corps de référence, à l'opposé du vérin. Cette vis, qui se trouve ainsi dans une position accessible depuis l'extérieur du palpeur, permet d'augmenter ou de diminuer par vissage ou dévissage la flèche du premier ressort qui s'y appuie, donc sa pression en faisant varier la grandeur de la différence des pressions appliquées par ces deux ressorts opposés sur la butée du corps mobile.

Il est possible également de remplacer le premier ressort par un autre de constance d'élasticité différente de manière également très simple après enlèvement de la vis d'appui par simple dévissage. Il suffit alors au montage du palpeur de mettre à la place du second ressort, de l'autre côté de la butée du corps mobile, un ressort de constance d'élasticité suffisamment grande pour fournir la pression de mesure maximale désirée, cette pression étant diminuée chaque fois en fonction de l'augmentation de la constance d'élasticité du ressort mis à la place du premier ressort en appui sur la vis en question. Un jeu de ressorts de constances d'élasticité différentes peut ainsi être prévu.

Le dessin annexé représente, à titre d'exemple, une forme d'exécution de l'objet de l'invention.

La figure 1 en est une vue en élévation-coupe partielle, représentée en configuration de dégagement de la touche.

La figure 2 en est une vue de profil.

La figure 3 en est une vue partielle en élévation-coupe, représentée en configuration de prise de mesure.

La figure 4 est une vue en élévation illustrant une utilisation particulière de cet objet.

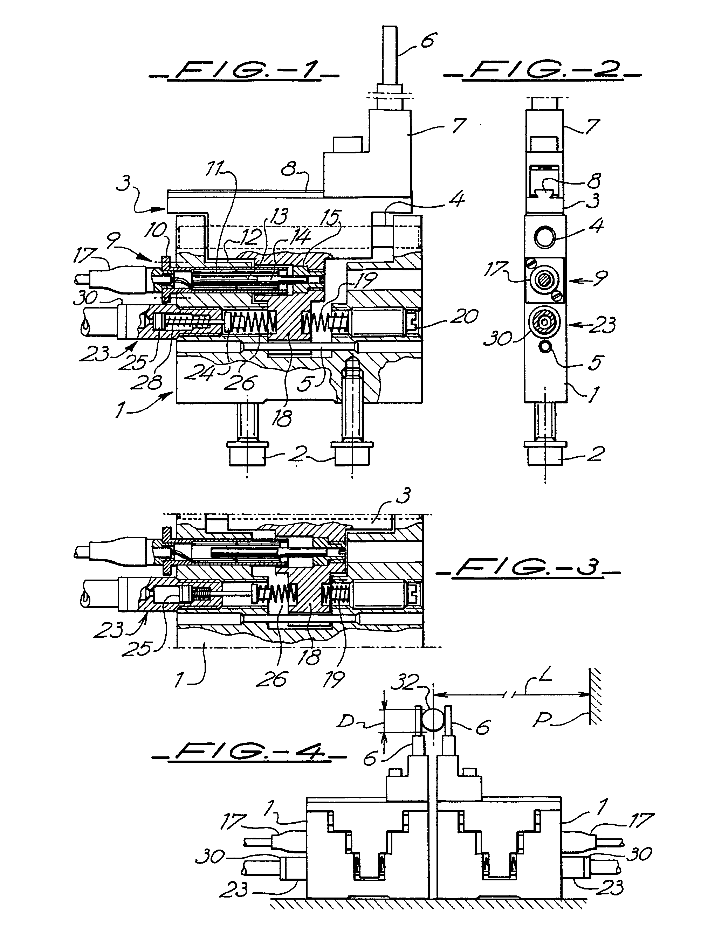

Le palpeur représenté figures 1 à 3 comporte:

un corps de référence 1 en forme de parallélépipède rectangle échancré destiné à être fixé par sa base et par le moyen de deux vis 2 sur le support non représenté d'un dispositif de mesure du type conventionnel utilisé pour le contrôle dimensionnel de pièces fabriquées en série.

Un corps mobile 3 semi-encastré dans le corps de référence 1 et monté déplaçable par translation par rapport à celui-ci et dans son plan le long d'un arbre 4 par sa partie haute et le long d'une glissière 5 par sa partie basse, cette glissière et cet arbre étant fixés au corps de référence 1. Le corps mobile 3 porte une touche de mesure 6 vissée dans un support 7 fixé sur un banc en queue d'aronde 8 constituant la partie supérieure du corps mobile.

Un capteur de déplacement 9, ici électronique du type connu à induction dont le boîtier cylindrique 10 portant les deux bobines 11 est fixé dans un alésage 12 du corps de référence 1 parallèle à l'arbre 4 et dont le noyau de ferrite 13 prolonge une tige de mesure 14 fixée au corps mobile 3 par le moyen d'un mandrin 15 engagé et bloqué par vissage dans un logement cylindrique de ce corps mobile aligné sur l'axe de l'alésage 12. Les bobines 11 et le noyau de ferrite 13 constituent les deux éléments de détection des déplacements relatifs du corps de référence 1 et du corps mobile 3; ils traduisent ces déplacements, en sens et grandeurs, par rapport à un zéro préréglé et sur une course de mesure réduite inférieure à la course capable du corps mobile dans l'échancrure du corps de référence, en signaux électriques analogues qui sont transmis, par un câble 17 raccordé aux bobines 11, à un circuit électronique de traitement aboutissant à un instrument indicateur analogique ou numérique, tout ceci de manière conventionnelle non représentée.

Ce palpeur comporte également un dispositif de prise de mesure et un dispositif de dégagement de la touche de mesure qui agissent tous deux par pressions antagonistes appliquées sur une butée 18 qui constitue en fait ici la partie basse du corps mobile 3 guidée par la glissière 5.

Le dispositif de dégagement de la touche de mesure est constitué par un premier ressort de compression 19 interposé entre le corps de référence 1 et la butée 18. Du côté du corps de référence ce ressort 19 est mis en appui contre une vis 20 en prise dans un trou fileté de ce corps de référence et comportant un téton de maintien dudit ressort. Du côté de la butée 18 ce ressort 19 est mis en appui contre le fond d'un premier chambrage. L'action de ce premier ressort est prévue pour dégager la touche de mesure par déplacement du corps mobile 3 de la droite vers la gauche sur le dessin, comme cela est représenté figure 1.

Le dispositif de prise de mesure est constitué par un vérin pneumanique 23 à un seul effet, dont le cylindre est fixé au corps de référence 1 et dont l'extrémité extérieure 24 de la tige du piston 25 comporte un second ressort de compression 26 interposé entre elle et la butée 18 du corps mobile. Du côté du corps de référence 1 le cylindre du vérin 23 est vissé dans un trou fileté de ce corps et le retour automatique de ce vérin est assuré en partie par un ressort de rappel interne 28. Du côté de la butée 18 du corps mobile le second ressort 26 est mis en appui contre le fond d'un second chambrage opposé au premier. La chambre à fluide du vérin 23 comporte un raccord 30 de liaison avec un conduit relié à une source d'air comprimé.

Les actions combinées du vérin 23 et du second ressort 26 sont prévues pour fournir la pression de mesure désirée par déplacement de ce second ressort de la gauche vers la droite sur le dessin, cette pression de mesure étant obtenue par la seule différence des pressions antagonistes appliquées par les deux ressorts 19 et 26 sur la butée 18 à partir du moment où le piston 25 de ce vérin arrive en butée de fin de course d'extension, comme cela est représenté figure 3.

Bien entendu, pour obtenir un tel effet, la constance d'élasticité ainsi que la longueur active de chacun de ces deux ressorts sont déterminées pour produire au moins la valeur minimale admise de la pression de mesure désirée en fin de course d'extension du vérin et le dégagement de la touche de mesure en fin de course de rétraction de ce même vérin, comme cela a déjà été dit précédemment.

L'un des deux avantages déjà signalés est illustré par la figure 4. Le fait que le vérin pneumatique 23 et son raccord 30 sont montés du côté du corps de référence 1 opposé à la direction de la prise de mesure, et ici également du même côté que le câble de raccordement 17 du capteur de déplacement permet de rapprocher suffisamment dans un même plan deux capteurs de ce type pour contrôler à l'aide de leurs deux touches de mesure 6 ainsi rapprochées à la fois le diamètre D d'un arbre 32 et l'éloignement L de son axe de révolution par rapport à un plan de référence P perpendiculaire à la direction de la prise de mesure, ces contrôles étant obtenus à partir des deux mesures comparatives fournies par ces deux palpeurs.

Bien entendu l'invention est applicable à tous palpeurs analogues dans leurs principes et pour lesquels se pose au moins l'un des deux problèmes qu'elle permet de résoudre relatifs soit à leurs dispositifs de prise de mesure et de dégagement de la touche de mesure, soit à l'encombrement de leurs liaisons.

Des variantes pourront être apportées. Ainsi par exemple le vérin 23 peut aussi bien être hydraulique ou bien tout simplement remplacé par un poussoir à commande manuelle.

Le ressort de rappel 28 de ce vérin 23, qui soulage ici l'action de dégagement de la touche de mesure fournie par le premier ressort 19 permet de réduire d'autant la pression développée par le second ressort 26. Lorsque cet effet subsidiaire n'est pas recherché, ce ressort 28 peut évidemment être supprimé.

**Revendication**

Palpeur pour dispositifs de mesure de grandeurs linéaires comparatives comportant un corps de référence (1) destiné à être fixé sur un support approprié au maintien d'une pièce à contrôler, un corps mobile (3) déplaçable le long d'éléments de guidage solidaires du corps de référence et portant une touche de mesure (6), un capteur de déplacements (9) comportant deux éléments de détection liés respectivement l'un au corps de référence et l'autre au corps mobile pour fournir des signaux représentatifs en sens et amplitude des déplacements relatifs de ces deux corps par rapport à un zéro préréglé, un dispositif de prise de mesure apte à délivrer une pression de mesure par poussée élastique appliquée contre une butée solidaire du corps mobile, et un dispositif de dégagement de la touche de mesure apte à appliquer contre cette même butée une contre-pression de dégagement opposée à la pression de mesure, caractérisé en ce que le capteur de déplacements (9) et les dispositifs de prise de mesure et de dégagement de la touche de mesure (19, 20, 23, 24, 26) sont séparés l'un au-dessus des autres dans deux positions parallèles dans les deux corps (1, 3), en ce que le dispositif de dégagement de la touche de mesure comporte une vis d'appui (20) engagée dans un trou fileté débouchant à l'extérieur du corps de référence (1) et un premier ressort (19) interposé entre cette vis d'appui et un côté de la butée (18) du corps mobile, en ce que le dispositif de prise de mesure comporte un vérin (23) dont le cylindre (24) est fixé dans le corps de référence (1) et dont l'extrémité extérieure (24) du piston est en regard de l'autre côté de la butée (18) du corps mobile, et un second ressort de compression (26) interposé entre cette extrémité et cette face d'appui, la butée (18) du corps mobile étant ainsi interposée entre le premier (19) et le second ressort (26) et subissant leurs pressions antagonistes, et en ce que la constance d'élasticité ainsi que la longueur active de chacun de ces deux ressorts sont déterminées pour produire la pression de mesure en fin de course d'extension du vérin et le dégagement de la touche de mesure en fin de course de rétraction de ce vérin.

## Patentanspruch

Fühler für Meßeinrichtungen für komparative Lineargrößen mit einem auf einem geeigneten Auflager an der Halterung eines zu kontrollierenden Teiles befestigbaren Bezugskörper (1), einem beweglichen Körper (3), der auf mit dem Bezugskörper fest verbundenen Führungselementen verschiebbar ist und eine Meßspitze (6) trägt, einem Wegmesser (9), der zwei Detektorelemente aufweist, von denen das eine mit dem Bezugskörper und das andere mit dem beweglichen Körper verbunden ist, zur Lieferung von Signalen, die nach Richtung und Amplitude für die Relativverschiebungen dieser beiden Körper gegenüber einer voreingestellten Null-Lage repräsentativ sind, einer Vorrichtung für den Meßabgriff, mit der eine Meßkraft durch elastischen Druck gegen ein mit dem beweglichen Körper fest verbundenes Widerlager aufbringbar ist, und einer Vorrichtung zur Freisetzung der Meßspitze, mit der ein der Meßkraft entgegenwirkender Freigabe-Gegendruck auf dieses Widerlager aufbringbar ist, dadurch gekennzeichnet, daß der Wegmesser (9) und die Vorrichtungen für den Meßabgriff und zur Freisetzung der Meßspitze (19, 20, 23, 24, 26) getrennt, übereinander in zwei parallelen Lagen in den beiden Körpern (1, 3) angeordnet sind, daß die Vorrichtung zur Freisetzung der Meßspitze eine Abstützschraube (20), die in eine zur Außenseite des Bezugskörpers (1) offene Gewindebohrung eingeschraubt ist, und eine zwischen dieser Abstützschraube und einer Seite des Widerlagers (18) des beweglichen Körpers eingesetzte erste Feder (19) aufweist, daß die Vorrichtung für den Meßabgriff eine Kolben-Zylinder-Einheit (23) aufweist, deren Zylinder im Bezugskörper (1) befestigt ist und deren äußeres Ende (24) des Kolbens sich gegenüber der anderen Seite des Widerlagers (18) des beweglichen Körpers befindet, und eine zweite Druckfeder (26), die zwischen diesem Ende und der Abstützfläche angeordnet ist, so daß das Widerlager (18) des beweglichen Körpers sich zwischen der ersten Feder (19) und der zweiten Feder (26) befindet und deren gegeneinandergerichtete Druckkräfte aufnimmt, und daß die Elastizitätskonstante sowie die wirksame Länge jeder dieser beiden Federn derart festgelegt sind, daß am Ende des Ausdehnungshubes der Kolben-Zylinder-Einheit die Meßkraft erzeugt und am Ende der Einziehbewegung die Freisetzung der Meßspitze erreicht wird.

## Claim

A feeler for devices for measuring comparative linear values comprising a reference body (1) intended to be fixed on a support suitable for holding a part to be checked, a moving body (3) which can be displaced along guiding elements integral with the reference body and carries a measuring probe (6), a displacement sensor (9) comprising two detecting elements of which one is connected to the reference body and the other to the moving body respectively to provide signals which are representative in direction and amplitude of the relative displacements of these two bodies relative to a preadjusted zero, a measuring device capable of delivering a measuring pressure by elastic thrust applied to an abutment integral with the moving body, and a device for releasing the measuring probe which is capable of applying to this same abutment a release back-pressure opposed to the measuring pressure, characterised in that the displacement sensor (9) and the devices for taking measurements and for releasing the measuring probe (19, 20, 23, 24, 26) are separated one above the other in two parallel positions in the two bodies (1, 3), in that the device for releasing the measuring probe comprises a supporting screw (20) engaged in a threaded hole opening at the exterior of the reference body (1) and a first spring (19) interposed between this support screw and one side of the abutment (18) of the moving body, in that the measuring device comprises a jack (23) of which the cylinder (24) is fixed in the reference body (1) and of which the external end (24) of the piston faces the other side of the abutment (18) of the moving body, and a second compression spring (26) interposed between this end and this support face, the abutment (18) of the moving body thus being interposed between the first spring (19) and the second spring (26) and receiving the antagonistic pressures thereof, and in that the elastic constant as well as the active length of each of these two springs are determined so as to produce the measuring pressure at the end of the extension travel of the jack and the release of the measuring probe at the end of the retraction travel of this jack.

EP 0 175 098 B1

_FIG.-1_    _FIG.-2_

_FIG.-3_

_FIG.-4_